(19) Europäisches Patentamt
European Patent Office
Office européen des brevets

(11) **EP 2 062 718 B1**

(12) **EUROPÄISCHE PATENTSCHRIFT**

(45) Veröffentlichungstag und Bekanntmachung des Hinweises auf die Patenterteilung:
**07.10.2015 Patentblatt 2015/41**

(21) Anmeldenummer: **07120677.5**

(22) Anmeldetag: **14.11.2007**

(51) Int Cl.:
*B29C 47/10* (2006.01)    *B29C 47/40* (2006.01)
*B29B 7/90* (2006.01)    *B29D 7/01* (2006.01)
*C08K 3/36* (2006.01)    *C08L 77/00* (2006.01)
*C08L 77/02* (2006.01)    *C08L 77/06* (2006.01)
*C08J 3/22* (2006.01)    *C08J 5/18* (2006.01)

(54) **Herstellung und Verwendung eines Polyamid-Antiblock-Masterbatches**

Manufacture and application of a polyamide antiblock master batch

Fabrication et utilisation d'un mélange maître anti-bloc de polyamide

(84) Benannte Vertragsstaaten:
**AT BE BG CH CY CZ DE DK EE ES FI FR GB GR HU IE IS IT LI LT LU LV MC MT NL PL PT RO SE SI SK TR**

(43) Veröffentlichungstag der Anmeldung:
**27.05.2009 Patentblatt 2009/22**

(73) Patentinhaber: **EMS-PATENT AG**
**7013 Domat / Ems (CH)**

(72) Erfinder:
• **Pfleghar, Mark**
**7013 Domat/Ems (CH)**
• **Hahn, Steffen**
**7402 Bonaduz (CH)**
• **Tuor, Gion Antoni**
**7403 Rhäzüns (CH)**
• **Melillo, Nicola**
**7013 Domat/Ems (CH)**

(74) Vertreter: **OK pat AG**
**Chamerstrasse 50**
**6300 Zug (CH)**

(56) Entgegenhaltungen:
EP-A- 0 835 903    EP-A- 1 415 784
JP-A- 2004 339 465    US-A- 5 109 049

**Beschreibung**

Die Erfindung betrifft ein Compoundierverfahren zur Herstellung eines Polyamid-Antiblock-Masterbatches, bei welchem 4 bis 23 Gew.-% eines nicht oberflächenbehandelten, synthetischen, amorphen, feinpartikulären Siliziumdioxids mit einem mittleren Teilchendurchmesser von 1 bis 8 $\mu$m in einem einzigen Extrusionsdurchgang in ein Trägerpolyamid eingearbeitet werden. Der Masterbatch wird zur Produktion von Folien verwendet, bevorzugt zur Produktion von orientierten Folien, besonders bevorzugt zur Produktion von biaxial orientierten Folien. Der Begriff Folien umfasst sowohl Flach-, als auch Blasfolien.

Das Einarbeiten von siliziumhaltigen Antiblockmitteln mit niedriger Schüttdichte in ein Trägerpolymer mittels eines Extruders ist an sich bekannt. Etwaige dabei auftretende Probleme sind: Rückstau im Einzug, Korrosion von Dosier- und Extruderschnecken, ungenügende Qualität des Masterbatches. Bislang war es nicht möglich, ein feinpartikuläres, nicht oberflächenbehandeltes, synthetisches, amorphes Siliziumdioxid mittels eines Extruders in einem einzigen Durchgang in ein Trägerpolyamid einzuarbeiten und damit einen Masterbatch mit guter Qualität herzustellen.

Ein Compoundierverfahren zum Herstellen eines Masterbatches aus einem Nylon-Polymer und einem Antiblockmittel wird im Patent US 5,109,049 offenbart. Dabei ist das Antiblockmittel ausgewählt aus einer Gruppe, die anorganische Kugeln aus Silikaten, Talk, Kalziumkarbonat und deren Kombinationen umfasst. Obwohl in diesem Patent offenbart wird, dass die Antiblockmittel in die Schmelze des Trägerpolymers eingearbeitet werden sollen, und dass eine homogene Mischung erfolgen soll, schweigt dieses Dokument über die genaue Art und Weise dieser Einarbeitung. Dieses Dokument gibt an, dass Masterbatches mit einem Antiblockmittel-Anteil von 80-15 Gew.-% hergestellt werden können.

Die Aufgabe der vorliegenden Erfindung ist es, ein alternatives Compoundierverfahren zur Herstellung eines Polyamid-Antiblock-Masterbatches vorzuschlagen, bei welchem 4 bis 23 Gew.-% eines synthetischen, amorphen, feinpartikulären Siliziumdioxids mit einem mittleren Teilchendurchmesser von 1 bis 8 $\mu$m, welches nicht oberflächenbehandelt ist, in einem einzigen Extrusionsdurchgang in ein Trägerpolyamid eingearbeitet werden können, wobei das resultierende Masterbatchgranulat maximal 15 Einschlüsse pro 100 g Masterbatchgranulat aufweisen darf.

Diese Aufgabe wird mit einem Verfahren mit den Merkmalen des unabhängigen Anspruchs 1 gelöst.

Das erfindungsgemässe Compoundierverfahren zur Herstellung eines Polyamid-Antiblock-Masterbatches, bei welchem 4 bis 23 Gew.-% eines nicht oberflächenbehandelten, synthetischen, amorphen, feinpartikulären Siliziumdioxids mit einem mittleren Teilchendurchmesser von 1 bis 8 $\mu$m als Füllstoff in einem einzigen Extrusionsdurchgang in ein Trägerpolyamid eingearbeitet werden, ist dadurch gekennzeichnet, dass ein Doppelschnecken-Extruder mit einer Verfahrenslänge von mindestens 40D verwendet wird, und dass Teilmengen des synthetischen, amorphen, feinpartikulären Siliziumdioxids über mindestens zwei Dosierstellen in verschiedenen Zonen dieses Doppelschnecken-Extruders dem Trägerpolyamid zudosiert werden, wobei eine dieser mindestens zwei Dosierstellen ein erster Sidefeeder ist, und wobei das Compoundierverfahren bei Extruderdrehzahlen von 200 bis 1200 U/min durchgeführt wird.

Bevorzugte Ausführungsformen des erfindungsgemässen Verfahrens sowie weitere erfinderische Merkmale ergeben sich aus den abhängigen Ansprüchen.

Für das nicht oberflächenbehandelte, synthetische, amorphe, feinpartikuläre Siliziumdioxid mit einem mittleren Teilchendurchmesser von 1 bis 8 $\mu$m, das im erfindungsgemässen Herstellungsverfahren als Antiblockmittel und somit als Füllstoff eingesetzt wird, wird im Folgenden die Bezeichnung synthetisches Siliziumdioxid verwendet.

Das Trägerpolyamid ist bevorzugt ausgewählt aus der Gruppe, welche aus PA 6, PA 66, PA 11, PA 12, PA1212, PA 6/12, PA 6/66, PA 6/69, PA 6I/6T und deren Mischungen besteht. Besonders bevorzugt ist ein Trägerpolyamid, das ausgewählt ist aus der Gruppe, welche aus PA 6, PA 12, PA 6/12 und PA 6I/6T und deren Mischungen besteht.

Entsprechend den verwendeten Trägerpolyamiden beträgt die Extrudertemperatur mindestens 180 °C, bevorzugt mindestens 220 °C, besonders bevorzugt mindestens 250 °C und ganz speziell bevorzugt mindestens 250 bis 300 °C. Dabei wird das Extrudergehäuse des Fronteinzugs auf eine Temperatur von maximal 60 °C, bevorzugt maximal 40 °C und besonders bevorzugt maximal 25 °C gekühlt.

Im erfindungsgemässen Compoundierverfahren zur Herstellung eines Polyamid-Antiblock-Masterbatches wird ein nicht oberflächenbehandeltes, synthetisches, amorphes, feinpartikuläres Siliziumdioxid verwendet. Der mittlere Teilchendurchmesser dieses synthetischen Siliziumdioxids beträgt 1 bis 8 $\mu$m, bevorzugt 1 bis 6 $\mu$m, besonders bevorzugt 1,5 bis 4 $\mu$m, ganz besonders bevorzugt 2 bis 3 $\mu$m. Die Oberfläche (BET) dieses synthetischen Siliziumdioxids beträgt 200 bis 400 m$^2$/g, bevorzugt 250 bis 380 m$^2$/g, besonders bevorzugt 280 bis 360 m$^2$/g. Das Porenvolumen dieses synthetischen Siliziumdioxids beträgt 1,0 bis 2,0 ml/g, bevorzugt 1,2 bis 1,8 ml/g, besonders bevorzugt 1,4 bis 1,6 ml/g.

Mit dem erfindungsgemässen Compoundierverfahren können 4 bis 23 Gew.-% an synthetischem Siliziumdioxid in das Trägerpolyamid eingearbeitet werden. Für niedrigere Mengen an synthetischem Siliziumdioxid ist kein spezielles Compoundierverfahren nötig. Bei Verwendung höherer Mengen kann die erforderliche Masterbatchqualität nicht mehr erreicht werden. Bevorzugt werden 4 bis 18 Gew.-%, besonders bevorzugt 5 bis 14 Gew.-%, ganz besonders bevorzugt 7 bis 12 Gew.-% synthetisches Siliziumdioxid in das Trägerpolyamid eingearbeitet.

Bei dem erfindungsgemässen Compoundierverfahren werden mindestens zwei und maximal vier Dosierstellen für das synthetische Siliziumdioxid verwendet. Zur Verfügung stehen ein Fronteinzug und drei Sidefeeder, wobei die Sidefeeder nach der Aufschmelzzone des Trägerpolyamides angeordnet sind. Bei Verwendung von zwei Dosierstellen ist mindestens ein erster Sidefeeder dabei. Der Fronteinzug muss nicht verwendet werden. Es können auch zwei oder drei Sidefeeder, ohne Fronteinzug verwendet werden. Die Sidefeeder dienen der Zwangsförderung des synthetischen Siliziumdioxids in das aufgeschmolzene Trägerpolyamid.

In den Fronteinzug können maximal 5 Gew.-%, in jeden Sidefeeder maximal 6 Gew.-% synthetisches Siliziumdioxid dosiert werden. Höhere Mengen werden nicht mehr vollständig eingearbeitet und es kommt zum Rückstau. Bei der Einarbeitung von 23 Gew.-% synthetischem Siliziumdioxid in das Trägerpolyamid, werden bevorzugt 5 Gew.-% des synthetischen Siliziumdioxids in den Fronteinzug und je 6 Gew.-% in den ersten, zweiten und dritten Sidefeeder dosiert (siehe Spalte A der Tabelle 1). Das Trägerpolyamid wird über eine gravimetrische Dosierwaage bevorzugt in den Fronteinzug dosiert.

In Tabelle 1 werden in den Spalten A bis D bevorzugte Maximalmengen an synthetischem Siliziumdioxid im Überblick dargestellt, die über die unterschiedlichen Dosierstellen des Doppelschnecken-Extruders mit einer Verfahrenslänge von mindestens 40D in die Trägerpolyamide eingebracht werden.

Tabelle 1

| | Dosierung in Gew.-% | | | |
|---|---|---|---|---|
| | A | B | C | D |
| **Fronteinzug** | 5 | 0 | 2 | 0 |
| **1. Sidefeeder** | 6 | 6 | 4 | 4 |
| **2. Sidefeeder** | 6 | 6 | 4 | 4 |
| **3. Sidefeeder** | 6 | 6 | 4 | 4 |
| **Total** | 23 | 18 | 14 | 12 |

Die Tatsache, dass Mengen von 4 bis 23 Gew.-% eines nicht oberflächenbehandelten, synthetischen, amorphen, feinpartikulären Siliziumdioxids mit einem mittleren Teilchendurchmesser von 1 bis 8 $\mu$m in einem einzigen Extrusionsdurchgang und mit hohen Durchsätzen in das Trägerpolyamid eingearbeitet und auf diesem Wege Masterbatches von hoher Qualität erzeugt werden können, macht dieses Herstellverfahren und den resultieren Masterbatch wirtschaftlich interessant. In diesem Zusammenhang sind unter hohen Durchsätzen Durchsätze von mindestens 90 kg/h, bevorzugt von mindestens 120 kg/h, besonders bevorzugt von mindestens 160 kg/h zu verstehen.

Bei der Dosierung des synthetischen Siliziumdioxids muss darauf geachtet werden, dass es locker bleibt und nicht verpresst bzw. kompaktiert wird. Um dies zu gewährleisten, wird das synthetische Siliziumdioxid jeweils aus einem Vorratsbehälter mit einem maximalen Volumen von 75 l, bevorzugt 50 l, besonders bevorzugt 35 l über eine gravimetrische Dosierwaage in den Fronteinzug bzw. in die Einzugtrichter der Sidefeeder gefördert. In den Einzugtrichtern der Sidefeeder wird es mittels rotierender Kreuzrührarmen nochmals aufgelockert. Die Drehzahl der Kreuzrührarme ist regelbar und kann bevorzugt unabhängig von der Drehzahl der Dosierschnecken der Sidefeeder eingestellt werden. Bei dem Vorratsbehälter handelt es sich bevorzugt, um einen paddelmassierten, flexiblen Polyurethan-Trog, um der Brückenbildung entgegenzuwirken.

Die Sidefeeder besitzen gleichläufige Doppelschnecken, die ineinandergreifen und selbstreinigend sind. Die Steigung der Schnecken beträgt 1D, sie entspricht damit gerade dem Schneckendurchmesser. Der Spalt zwischen den beiden Dosierschnecken darf nicht zu eng sein, um ein Verpressen des synthetischen Siliziumdioxids zu verhindern.

Um Korrosion an den Dosierschnecken der Sidefeeder zu verhindern, werden entweder Dosierschnecken aus chromfreiem Stahl verwendet oder die Dosierschnecken sind mit einem chromfreien Schutzüberzug versehen. Dieser Schutzüberzug kann aus einem Metall oder einem Metallnitrid bestehen. Bei den Metallen sind Nickel, Titan, Vanadium, Molybdän und Wolfram bevorzugt, wobei Nickel besonders bevorzugt ist. Bei den Metallnitriden sind Wolframnitrid und Titannitrid bevorzugt. Der Schutzüberzug muss mindestens im vorderen Viertel bis Drittel der Dosierschnecke, also zum Extruder hin, angebracht sein. Bevorzugt ist die ganze Dosierschnecke mit dem Schutzüberzug versehen.

Der Polyamid-Antiblock-Masterbatch wird als Granulat mit einem Volumen von 0.5 bis 45 mm$^3$, bevorzugt 1 bis 25 mm$^3$, besonders bevorzugt 3 bis 20 mm$^3$ hergestellt. Die Form des Granulats ist an sich beliebig, z.B. annähernd würfelförmig, linsenartig, annähernd kugelförmig oder annähernd zylindrisch. Bevorzugt ist das Granulat annähernd zylindrisch mit einer Länge von 1 bis 6 mm, bevorzugt 1 bis 5 mm, besonders bevorzugt 1 bis 4 mm, ganz besonders bevorzugt 2 bis 4 mm und einem Durchmesser von 1 bis 3 mm, bevorzugt 1 bis 2 mm. Die Form des Masterbatchgranulats kann an die Form des Granulats angepasst werden in das er eingearbeitet werden soll.

Die Qualität des Masterbatches wird an Hand der Kriterien Einschlüsse, Yellow Index und Foliennote beurteilt.

Die Erfüllung der Qualitätskriterien ist nötig, um ein verkaufsfähiges Produkt zu erhalten.

Die Einschlüsse, sogenannte "black spots", werden zum Beispiel durch Schneckenkorrosion, Ablagerungen im Extruder oder Düsenperlen verursacht. Zur Bestimmung der Anzahl Einschlüsse pro 100 g wird in 100 g Masterbatchgranulat die Anzahl derjenigen Granulate ausgezählt die Einschlüsse aufweisen. Die Anzahl der Einschlüsse pro 100 g des Masterbatchgranulats, darf maximal 15, bevorzugt maximal 10, besonders bevorzugt maximal 5 betragen.

Die Messung des Yellow Indexes erfolgt gemäss den Bestimmungen der ASTM E 313. Dazu wird Masterbatchgranulat in einen Porzellantiegel gefüllt und mit dem Farbmessgerät datacolor 3890 der Firma datacolor bei einer Temperatur von 23 °C vermessen. Der Yellow Index darf maximal 25, bevorzugt maximal 15, besonders bevorzugt maximal 10 betragen.

Zur Bestimmung der Foliennote (FN) werden 4 Gew.-% Masterbatch und 96 Gew.-% Polyamid 6 ausgemischt und aus der Granulatmischung eine Flachfolie extrudiert, z.B. mit einem Plasti-Corder der Firma Brabender. Während 20 Minuten wird dabei die Folie an einem optischen System vorbeigeführt, welches die Verunreinigungen in der Folie detektiert, zählt (Angabe pro m$^2$) und deren Grösse bestimmt. Solch ein optisches System mit Auswerteprogramm wird von der Firma OCS GmbH Witten unter der Bezeichnung "Folientest FT4" vertrieben. Die Verunreinigungen in dieser Folie werden in 10 Grössenklassen (vgl. folgende Tabelle 2) eingeteilt. Diese Klassen werden mit unterschiedlichen Gewichtsfaktoren gewichtet.

Tabelle 2

| Grössenklasse [$\mu$m] | Gewichtsfaktor (fi) | Grössenklasse [$\mu$m] | Gewichtsfaktor (fi) |
|---|---|---|---|
| < 100 | 0.1 | 500 - 600 | 40 |
| 100 - 200 | 1 | 600 - 700 | 55 |
| 200 - 300 | 10 | 700 - 800 | 100 |
| 300 - 400 | 20 | 800 - 900 | 200 |
| 400 - 500 | 30 | > 900 | 350 |

Die Foliennote berechnet sich nach der folgenden Formel durch Addieren der Summen der gewichteten Verunreinigungen pro Grössenklasse und Dividieren durch 1000:

$$ FN = \frac{\sum_{i=1}^{10} x_i \bullet f_i}{1000} \tag{1} $$

Dabei gilt:

xi = Verunreinigungen / m$^2$ / Grössenklasse
fi = Gewichtsfaktoren

Die Foliennote darf maximal 5, bevorzugt maximal 2,5, besonders bevorzugt maximal 2 betragen.

Die Verfahrenslänge eines Extruders wird üblicherweise als das Mehrfache des Extruderschneckendurchmessers (D) angegeben. Beispielsweise beträgt eine Verfahrenslänge von 40D das 40-fache des Extruderschneckendurchmessers. Zur Durchführung des erfindungsgemässen Compoundierverfahrens wird ein gegenläufiger Doppelschnecken-Extruder, auch Doppelwellen-, Zweiwellen- oder Zweischnecken-Extruder genannt, mit einer Verfahrenslänge von mindestens 40D verwendet; bevorzugt sind Verfahrenslängen von 40D bis 58D und besonders bevorzugt sind Verfahrenslängen von 40D bis 52D.

Vorzugsweise weist der Extruder eine stark scherende Schnecke auf. Grundsätzlich wird die Schnecke aus linksdrehenden Schneckenelementen, vor allem Förderelementen, aufgebaut, rechtsdrehende Schneckenelemente werden nur dort verwendet wo eine Stauwirkung erzielt werden soll. Um die stark scherende Wirkung zu erreichen werden die Förderelemente wie folgt ergänzt: in der Aufschmelzzone des Trägerpolyamids nach dem Fronteinzug durch mehrere Knetblöcke, bevorzugt 2 bis 4 Stück, besonders bevorzugt 3 Stück und danach durch ein aufstauendes, rechtsdrehendes Förderelement; nach jedem Sidefeeder durch mehrere Knetblöcke, bevorzugt jeweils 3 bis 6 Stück, besonders bevorzugt 5 Stück; in der drittletzten Zone durch mehrere Zahnmischelemente, bevorzugt 3 bis 6 Stück, besonders bevorzugt 4 Stück.

Beim erfindungsgemässen Compoundierverfahren weist der Extruder nach der Zone in dem das Trägerpolyamid aufgeschmolzen wird und jeweils in der Zone nach den Knetblöcken eine atmosphärische Entgasung auf. Optional kann in der vorletzten Zone des Extruders eine Vakuumentgasung durchgeführt werden. Wird eine Vakuumentgasung durchgeführt ist die Verwendung eines aufstauenden, rechtsdrehenden Förderelements am Ende der Zone zu empfehlen.

Zur Verringerung der Düsenperlen kann beim erfindungsgemässen Compoundierverfahren die Düsenplatte mit Wasserdampf oder Schutzgas beschleiert werden, als Schutzgas bevorzugt ist dabei Stickstoff.

Beim erfindungsgemässen Compoundierverfahren erfolgt die Compoundierung bei Extruderdrehzahlen von 200 bis 1200 U/min, bevorzugt 250 bis 900 U/min, besonders bevorzugt 450 bis 800 U/min.

Bei den Vergleichsbeispielen und bei den erfindungsgemässen Beispielen wurden folgende Doppelschnecken-Extruder verwendet:

Verfahrenslänge 36D:   Werner und Pfleiderer ZSK 58 M96 (Werner und Pfleiderer Stuttgart, Deutschland)

Verfahrenslänge 40D:   Berstorff ZE 40 R UTX (Berstorff Hannover, Deutschland)

Verfahrenslänge 52D:   Berstorff ZE 40 A UTX (Berstorff Hannover, Deutschland)

Die zum Durchführen der Versuchsreihen verwendeten Materialien und deren Parameter sind in der folgenden Tabelle 3 dargestellt.

Tabelle 3

| Parameter | | PA 6 | PA 6/12 | PA 6I/6T | synthetisches Siliziumdioxid |
|---|---|---|---|---|---|
| | | | | **Material** | |
| Relative Viskosität in m-Kresol, 20 °C, 0.5 Gew.-% | | 2.75* | 1.80 | 1.52 | - |
| Schmelztemperatur | [°C] | 222 | 130 | ** | - |
| Zusammensetzung | [Mol-%] | - | 54/ 46 | 66.7 / 33.3 | - |
| Mittlerer Teilchendurchmesser | [$\mu$m] | - | - | - | 2.1 - 2.7 |
| Oberfläche (BET) | [m$^2$/g] | - | - | - | 320 |
| Poren Volumen (N$_2$) | [ml/g] | - | - | - | 1.5 |
| Hersteller | | EMS-CHEMIE AG (Schweiz) | | | Grace Davison (Deutschland) |
| * 1 Gew.-%-ige Lösung in 96 %-iger Schwefelsäure bei 20 °C<br>** Amorphes Polyamid mit einer Glasumwandlungstemperatur (Tg) von 125 °C | | | | | |

Als feinpartikuläres, nicht oberflächenbehandeltes, synthetisches, amorphes Siliziumdioxid mit einem mittleren Teilchendurchmesser von 1 bis 8 $\mu$m - in Tabelle 3 als synthetisches Siliziumdioxid bezeichnet - wird in den Vergleichsbeispielen und Beispielen Sylobloc K 200 der Firma Grace Davison verwendet.

Die Tabelle 4 enthält die Resultate der Vergleichsbeispiele 1 bis 9, die bei Verwendung eines Doppelschnecken-Extruders mit einer Verfahrenslänge von 36D und einer Dosierung des synthetischen Siliziumdioxids über mindestens zwei Dosierstellen in verschiedenen Zonen dieses Doppelschnecken-Extruders in das Trägerpolyamid erhalten werden, wobei eine dieser mindestens zwei Dosierstellen ein erster Sidefeeder ist.

Tabelle 4

| Parameter | | 1 | 2 | 3 | 4 | 5 | 6 | 7 | 8 | 9 |
|---|---|---|---|---|---|---|---|---|---|---|
| | | **Vergleichsbeispiele Nr.** | | | | | | | | |
| Trägerpolyamid | (PA ...) | 6 | 6 | 6 | 6/12 | 6I/6T | 6 | 6 | 6 | 6 |
| Verfahrenslänge | | 36D | 36D | 36D | 36D | 36D | 36D | 36D | 40D | 52D |
| Anteil Füllstoff | [Gew.-%] | 8 | 6 | 6 | 6 | 6 | 8 | 8 | 8 | 8 |

(fortgesetzt)

| Parameter | | Vergleichsbeispiele Nr. | | | | | | | | |
|---|---|---|---|---|---|---|---|---|---|---|
| | | **1** | **2** | **3** | **4** | **5** | **6** | **7** | **8** | **9** |
| Dosierung Fronteinzug | [Gew.-%] | 8 | 6 | 3 | 3 | 3 | 3 | 0 | 0 | 0 |
| Dosierung SF1 | [Gew.-%] | 0 | 0 | 3 | 3 | 3 | 5 | 8 | 8 | 8 |
| Drehzahl Extruder | [U/min] | 300 | 400 | 190 | 190 | 190 | 190 | 190 | 190 | 570 |
| Durchsatz Extruder | [kg/h] | 80 | 80 | 80 | 80 | 80 | 80 | 80 | 80 | 120 |
| **Prüfungen** | | | | | | | | | | |
| Foliennote | | * | * | 15 | 18 | 33 | 30 | 36 | 8 | 5.0 |
| Einschlüsse n/100 g | | * | * | 30 | 38 | 50 | 36 | 100 | 18 | 25 |
| Yellow Index | | * | * | 9 | 8 | 15 | 12 | 13 | 8 | 19 |
| * Versuch abgebrochen | | | | | | | | | | |

Die Tabelle 4 zeigt, dass Mengen von 6 und 8 Gew.-% oder mehr an Siliziumdioxid nicht über eine einzelne Dosierstelle des Extruders zugegeben werden können, weil dieses feinpartikuläre Antiblockmittel mit extrem niedriger Schüttdichte einen Rückstau in der Dosierstelle verursacht (Vergleichsbeispiele 1 und 2). Die Tabelle 4 zeigt zudem, dass - trotz Erhöhung der Verfahrenslänge bis auf 52D (Vergleichsbeispiele 7 bis 9) - die erforderliche Materialqualität nicht erreicht wird. Auch bei den Vergleichsbeispielen 3 bis 6 wird die erforderliche Materialqualität nicht erreicht, trotz einer Aufteilung der Füllstoffmenge auf zwei Dosierstellen.

Eine Aufteilung des synthetischen Siliziumdioxids in zwei Teilmengen und ein Dosieren dieser zwei Teilmengen über mindestens zwei Dosierstellen in verschiedenen Zonen dieses Doppelschnecken-Extruders zum Trägerpolyamid PA 6 ermöglichte die Herstellung eines Masterbatches, welcher allerdings nur eines der drei Qualitätskriterien (Yellow Index) erfüllte (siehe Vergleichsbeispiel 3). Die beiden Dosierstellen waren der Fronteinzug und ein erster Sidefeeder.

Unter den gleichen Bedingungen wie beim PA 6 in Vergleichsbeispiel 3 wurde die gleiche Menge von 6 Gew.-% synthetischem Siliziumdioxid auf die gleiche Art in PA 6/12 (Vergleichsbeispiel 4) bzw. in PA 6I/6T (Vergleichsbeispiel 5) eingearbeitet. Auch hier führen die zu hohen Werte für die Einschlüsse und die Foliennote zum Verwerfen dieser beiden Versuche, obwohl der Yellow Index in beiden Fällen in Ordnung war.

Bei den Vergleichsbeispielen 7 bis 9 wird das synthetische Siliziumdioxid mittels eines Sidefeeders in die Schmelze des Polyamidträgers dosiert. Dies ist die Herstellungsweise wie sie im eingangs zitierten Patent US 5,109,049 (vgl. Spalte 4, Zeilen 15-19) offenbart wird. Die Vergleichsbeispiele 7 bis 9, bei denen jeweils 8 Gew.-% synthetisches Siliziumdioxid dosiert wird, zeigen somit, dass die im Patent US 5,109,049 angegebene Herstellungsweise für Konzentrate mit 80 - 15 Gew.-% Additive nicht funktioniert bzw. im Sinne der eingangs formulierten Aufgabenstellung keine zufriedenstellenden Ergebnisse liefert.

Tabelle 5 enthält die Resultate der erfindungsgemässen Beispiele 10 bis 15, die bei Verwendung eines Doppelschnecken-Extruders mit einer Verfahrenslänge von 40D und einer Dosierung des synthetischen Siliziumdioxids über mindestens zwei Dosierstellen in verschiedenen Zonen dieses Doppelschnecken-Extruders in das Trägerpolyamid erhalten werden, wobei eine dieser mindestens zwei Dosierstellen ein erster Sidefeeder ist.

Tabelle 5

| Parameter | | Beispiele Nr. | | | | | |
|---|---|---|---|---|---|---|---|
| | | **10** | **11** | **12** | **13** | **14** | **15** |
| Trägerpolyamid | (PA ...) | 6 | 6 | 6 | 6 | 6/12 | 6I/6T |
| Verfahrenslänge | | 40D | 40D | 40D | 40D | 40D | 40D |
| Anteil Füllstoff | [Gew.-%] | 8 | 8 | 10 | 12 | 8 | 8 |
| Dosierung Einzug | [Gew.-%] | 3 | 0 | 2 | 2 | 0 | 0 |
| Dosierung SF1 | [Gew.-%] | 5 | 4 | 4 | 5 | 4 | 4 |
| Dosierung SF2 | [Gew.-%] | 0 | 4 | 4 | 5 | 4 | 4 |
| Dosierung SF3 | [Gew.-%] | 0 | 0 | 0 | 0 | 0 | 0 |

(fortgesetzt)

| Parameter | | Beispiele Nr. | | | | | |
|---|---|---|---|---|---|---|---|
| | | 10 | 11 | 12 | 13 | 14 | 15 |
| Drehzahl Extruder | [U/min] | 450 | 600 | 650 | 650 | 500 | 500 |
| Durchsatz Extruder | [kg/h] | 160 | 160 | 120 | 120 | 160 | 160 |
| **Prüfungen** | | | | | | | |
| Foliennote | | 1.5 | 1.3 | 1.5 | 1.8 | 1.2 | 0.9 |
| Einschlüsse | [n/100 g] | 9 | 2 | 3 | 4 | 3 | 2 |
| Yellow Index | | 1 | 3 | 2 | 2 | 1 | 2 |

Wie Tabelle 5 zeigt, konnten Masterbatches hergestellt werden, die alle Qualitätsanforderungen, sowohl an die Anzahl Einschlüsse pro 100 g Granulat ($\leq 10$), als auch an die Foliennote ($\leq 5$) und den Yellow Index ($\leq 25$) erfüllen.

Es wurden Mengen von 8 bis 12 Gew.-% synthetisches Siliziumdioxid in Trägerpolyamide eingearbeitet, die ausgewählt wurden aus PA 6, PA 6/12 und PA 6I/6T.

Im erfindungsgemässen Beispiel 10 wurden Teilmengen von 3 Gew.-% in den Fronteinzug und 5 Gew.-% in den ersten Sidefeeder dosiert. Im erfindungsgemässen Beispiel 11 wurden Teilmengen von 4 Gew.-% in den ersten Sidefeeder und 4 Gew.-% in den in den zweiten Sidefeeder dosiert. Es resultierten Masterbatches, die in allen drei Qualitätskriterien die höchste Qualitätsstufe erreichten.

Im erfindungsgemässen Beispiel 12 ergab eine Erhöhung des synthetischen Siliziumdioxid-Zusatzes auf 10 Gew.-% mittels zusätzlicher Dosierung von 2 Gew.-% des synthetischen Siliziumdioxids in den Fronteinzug einen Masterbatch, der in allen drei Qualitätskriterien die höchste Qualitätsstufe erreichte.

Im erfindungsgemässen Beispiel 13 ergab eine weitere Erhöhung des synthetischen Siliziumdioxid-Zusatzes auf 12 Gew.-% mittels Dosierung von 2 Gew.-% des synthetischen Siliziumdioxids in den Fronteinzug und je 5 Gew.-% des synthetischen Siliziumdioxids in den ersten und zweiten Sidefeeder einen Masterbatch, der in allen drei Qualitätskriterien die höchste Qualitätsstufe erreichte.

Im erfindungsgemässen Beispiel 14 wurden die gleichen Mengen des synthetischen Siliziumdioxids über die gleichen Dosierstellen wie im Beispiel 11, nun aber in das Trägerpolyamid PA 6/12 eingebracht. Es resultierte ein Masterbatch, der in allen drei Qualitätskriterien die höchste Qualitätsstufe erreichte.

Im erfindungsgemässen Beispiel 15 wurden die gleichen Mengen des synthetischen Siliziumdioxids über die gleichen Dosierstellen wie in den Beispielen 11 und 14, nun aber in das Trägerpolyamid PA 6I/6T eingebracht. Es resultierte ein Masterbatch, der in allen drei Qualitätskriterien die höchste Qualitätsstufe erreichte.

Tabelle 6 enthält die Resultate der erfindungsgemässen Beispiele 16 bis 20, die bei Verwendung eines Doppelschnecken-Extruders mit einer Verfahrenslänge von 52D und einer Dosierung des synthetischen Siliziumdioxids über mindestens zwei Dosierstellen in verschiedenen Zonen dieses Doppelschnecken-Extruders in das geschmolzene Trägerpolyamid erhalten werden, wobei eine dieser mindestens zwei Dosierstellen ein erster Sidefeeder ist.

Tabelle 6

| Parameter | | Beispiele Nr. | | | | |
|---|---|---|---|---|---|---|
| | | 16 | 17 | 18 | 19 | 20 |
| Trägerpolyamid | (PA ...) | 6 | 6 | 6 | 6 | 6I/6T |
| Verfahrenslänge | | 52D | 52D | 52D | 52D | 52D |
| Anteil Füllstoff | [Gew.-%] | 8 | 8 | 8 | 8 | 8 |
| Dosierung Einzug | [Gew.-%] | 0 | 0 | 0 | 0 | 0 |
| Dosierung SF1 | [Gew.-%] | 4 | 4 | 4 | 4 | 4 |
| Dosierung SF2 | [Gew.-%] | 4 | 4 | 4 | 4 | 4 |
| Dosierung SF3 | [Gew.-%] | 0 | 0 | 0 | 0 | 0 |
| Drehzahl Extruder | [U/min] | 250 | 475 | 510 | 600 | 600 |
| Durchsatz Extruder | [kg/h] | 90 | 120 | 160 | 160 | 160 |

(fortgesetzt)

| Prüfungen | | | | | | |
|---|---|---|---|---|---|---|
| Foliennote | | 0.95 | 0.4 | 0.6 | 0.8 | 0.9 |
| Einschlüsse | [n/100 g] | 10 | 8 | 5 | 5 | 4 |
| Yellow Index | | 14 | 8 | 5 | 9 | 10 |

Wie Tabelle 6 zeigt konnten Masterbatchs hergestellt werden, die alle Qualitätsanforderungen, sowohl an die Anzahl Einschlüsse pro 100 g Granulat (≤ 10) als auch an die Foliennote (≤ 5) und den Yellow Index (≤ 25) erfüllen, wenn ein Doppelschnecken-Extruder mit einer Verfahrenslänge von 52D verwendet wird, und wenn Teilmengen des synthetischen Siliziumdioxids über mindestens zwei Dosierstellen in verschiedenen Zonen eines Doppelschnecken-Extruders dem geschmolzenen Trägerpolyamid zudosiert werden, wobei eine dieser mindestens zwei Dosierstellen ein erster Sidefeeder ist.

Bei diesen erfindungsgemässen Beispielen wurden jeweils 4 Gew.-% des synthetischen Siliziumdioxids in den ersten und zweiten Sidefeeder eines Doppelschnecken-Extruders mit einer Verfahrenslänge von 52D dosiert, wobei in den Beispielen 16 bis 19 PA 6 und im Beispiel 20 PA 6I/6T als Trägerpolyamid verwendet wurde. Die hergestellten Masterbatches hatten ausgezeichnete Foliennoten und erreichten bei den Einschlüssen und den Yellow Indices fast durchweg die höchste Qualitätsstufe.

Die Tabelle 7 enthält die Resultate der erfindungsgemässen Beispiele 21 bis 25, die bei Verwendung eines Doppelschnecken-Extruders mit einer Verfahrenslänge von 52D, einer Dosierung des synthetischen Siliziumdioxids über mindestens zwei Dosierstellen in verschiedenen Zonen dieses Doppelschnecken-Extruders in das Trägerpolyamid und einem Anteil des synthetischen Siliziumdioxids bis 12 Gew.-% erhalten werden.

Tabelle 7

| | | Beispiele Nr. | | | | |
|---|---|---|---|---|---|---|
| Parameter | | 21 | 22 | 23 | 24 | 25 |
| Trägerpolyamid | (PA ...) | 6 | 6 | 6/12 | 6 | 6 |
| Verfahrenslänge | | 52D | 52D | 52D | 52D | 52D |
| Anteil Füllstoff | [Gew.-%] | 8 | 8 | 8 | 10 | 12 |
| Dosierung Einzug | [Gew.-%] | 3 | 2 | 2 | 2 | 0 |
| Dosierung SF1 | [Gew.-%] | 5 | 6 | 6 | 4 | 4 |
| Dosierung SF2 | [Gew.-%] | 0 | 0 | 0 | 4 | 4 |
| Dosierung SF3 | [Gew.-%] | 0 | 0 | 0 | 0 | 4 |
| Drehzahl Extruder | [U/min] | 475 | 650 | 650 | 750 | 800 |
| Durchsatz Extruder | [kg/h] | 120 | 160 | 160 | 160 | 160 |
| Prüfungen | | | | | | |
| Foliennote | | 0.4 | 1.0 | 0.8 | 0.4 | 1.0 |
| Einschlüsse | [n/100 g] | 4 | 2 | 3 | 2 | 3 |
| Yellow Index | | 4 | 6 | 8 | 10 | 14 |

Wie Tabelle 7 zeigt, konnten Masterbatches hergestellt werden, die alle Qualitätsanforderungen, sowohl an die Anzahl Einschlüsse pro 100 g Granulat (≤ 10) als auch an die Foliennote (≤ 5) und den Yellow Index (≤ 25) erfüllen.

In den erfindungsgemässen Beispielen 21 und 22 wurden jeweils total 8 Gew.-% des synthetischen Siliziumdioxids in Teilmengen von 3 bzw. 2 Gew.-% in den Fronteinzug und in Teilmengen von 5 bzw. 6 Gew.-% in den ersten Sidefeeder eines Doppelschnecken-Extruders mit einer Verfahrenslänge von 52D dosiert, wobei PA 6 als Trägerpolyamid verwendet wurde.

Im erfindungsgemässen Beispiel 23 wurden die gleichen Parameter gewählt wie im Beispiel 22, wobei PA 6/12 als Trägerpolyamid verwendet wurde.

In den erfindungsgemässen Beispielen 24 und 25 wurde die totale Menge des zum Trägerpolyamid PA 6 zugegebenem synthetischen Siliziumdioxids jeweils um 2 Gew.-% auf total 10 bzw. 12 Gew.-% erhöht. Dabei wurde im Beispiel 24 eine Teilmenge von 2 Gew.-% in den Fronteinzug und je eine Teilmenge von 4 Gew.-% in den ersten und zweiten Sidefeeder eines Doppelschnecken-Extruders mit einer Verfahrenslänge von 52D dosiert. Im Beispiel 25 wurde je eine Teilmenge von 4 Gew.-% in den ersten, zweiten und dritten Sidefeeder eines Doppelschnecken-Extruders mit einer Verfahrenslänge von 52D dosiert.

Alle Masterbatches der erfindungsgemässen Beispiele 21 bis 25 zeigen ausgezeichnete Foliennoten und Einschlusswerte. Ausserdem erreichen alle bis auf einen beim Yellow Index die höchste Qualitätsstufe.

Bei allen erfindungsgemässen Beispielen (Beispiele 10 bis 25) werden mit dem erfindungsgemässen Compoundierverfahren Masterbatches hergestellt, die alle drei Qualitätskriterien Anzahl Einschlüsse pro 100 g Masterbatchgranulat, Yellow Index und Foliennote erfüllen. Auch die bevorzugten Qualitätsstufen (maximal 10 Einschlüsse pro 100 g; Foliennote maximal 2.5; Yellow Index maximal 15) werden in allen erfindungsgemässen Beispielen 10 bis 25 erreicht. Sogar die besonders bevorzugten Qualitätsstufen (maximal 5 Einschlüsse pro 100 g; Foliennote maximal 2; Yellow Index maximal 10) werden von den erfindungsgemässen Beispielen 11 bis 15 und 18 bis 24 erreicht.

Bei einem Verfahren unter Verwendung des gemäss den Merkmalen des Anspruchs 1 hergestellten Polyamid-Antiblock-Masterbatches zur Herstellung von Folien werden 1 bis 10 Gew.-%, bevorzugt 1 bis 6 Gew.-%, besonders bevorzugt 2 bis 5 Gew.-% des Masterbatches dem Granulat, aus dem die Folie hergestellt wird, zugegeben. Bei Mehrschichtfolien kann der Masterbatch dem Granulat beider oder nur einer Aussenschicht zugegeben werden. Bevorzugt handelt es sich bei dem Granulat, aus dem die Folie bzw. die Aussenschichten der Mehrschichtfolie hergestellt werden, um Polyamidgranulat.

Die Tabelle 8 enthält die Erklärung der verwendeten Abkürzungen für Polyamide.

Tabelle 8

| Abkürzung | Erklärung |
|---|---|
| PA 6 | Polyamid 6 aus $\epsilon$-Caprolactam |
| PA 66 | Polyamid 66 aus Hexamethylendiamin und Adipinsäure |
| PA 11 | Polyamid 11 aus 11-Aminoundecansäure |
| PA 12 | Polyamid 12 aus Laurinlactam oder $\omega$-Aminododecansäure |
| PA 1212 | Polyamid 1212 aus Dodecandiamin und Dodecandisäure |
| PA 6/12 | Copolyamid 6/12 aus $\epsilon$-Caprolactam und Laurinlactam oder aus $\epsilon$-Caprolactam und $\omega$-Aminododecansäure |
| PA 6/66 | Copolyamid 6/66 aus $\epsilon$-Caprolactam, Hexamethylendiamin und Adipinsäure |
| PA 6/69 | Copolyamid 6/69 aus $\epsilon$-Caprolactam, Hexamethylendiamin und Azelainsäure |
| PA6I/6T | Copolyamid 6I/6T aus Hexamethylendiamin, Isophthalsäure und Terephthalsäure |

**Patentansprüche**

1. Compoundierverfahren zur Herstellung eines Polyamid-Antiblock-Masterbatches, bei welchem 4 bis 23 Gew.-% eines nicht oberflächenbehandelten, synthetischen, amorphen, feinpartikulären Siliziumdioxids mit einem mittleren Teilchendurchmesser von 1 bis 8 $\mu$m in einem einzigen Extrusionsdurchgang in ein Trägerpolyamid eingearbeitet werden, **dadurch gekennzeichnet, dass** ein Doppelschnecken-Extruder mit einer Verfahrenslänge von mindestens 40D verwendet wird, dass Teilmengen des nicht oberflächenbehandelten, synthetischen, amorphen, feinpartikulären Siliziumdioxids über mindestens zwei Dosierstellen in verschiedenen Zonen dieses Doppelschnecken-Extruders dem Trägerpolyamid zudosiert werden, wobei eine dieser mindestens zwei Dosierstellen ein erster Sidefeeder ist, und dass das Compoundierverfahren bei Extruderdrehzahlen von 200 bis 1200 U/min durchgeführt wird.

2. Compoundierverfahren nach Anspruch 1, **dadurch gekennzeichnet, dass** Teilmengen des nicht oberflächenbehandelten, synthetischen, amorphen, feinpartikulären Siliziumdioxids über zwei Dosierstellen zudosiert werden, wobei eine dieser zwei Dosierstellen der Fronteinzug oder ein zweiter Sidefeeder ist.

3. Compoundierverfahren nach Anspruch 2, **dadurch gekennzeichnet, dass** Teilmengen des nicht oberflächenbehandelten, synthetischen, amorphen, feinpartikulären Siliziumdioxids über zwei Dosierstellen zudosiert werden, wobei eine dieser zwei Dosierstellen der Fronteinzug ist.

4. Compoundierverfahren nach Anspruch 2, **dadurch gekennzeichnet, dass** Teilmengen des nicht oberflächenbehandelten, synthetischen, amorphen, feinpartikulären Siliziumdioxids über zwei Dosierstellen zudosiert werden, wobei eine dieser zwei Dosierstellen ein zweiter Sidefeeder ist.

5. Compoundierverfahren nach Anspruch 1, **dadurch gekennzeichnet, dass** Teilmengen des nicht oberflächenbehandelten, synthetischen, amorphen, feinpartikulären Siliziumdioxids über drei Dosierstellen zudosiert werden, wobei eine dieser drei Dosierstellen der Fronteinzug und eine dieser drei Dosierstellen ein zweiter Sidefeeder ist.

6. Compoundierverfahren nach Anspruch 1, **dadurch gekennzeichnet, dass** Teilmengen des nicht oberflächenbehandelten, synthetischen, amorphen, feinpartikulären Siliziumdioxids über drei Dosierstellen zudosiert werden, wobei eine dieser drei Dosierstellen ein zweiter Sidefeeder und eine dieser drei Dosierstellen ein dritter Sidefeeder ist.

7. Compoundierverfahren nach Anspruch 1, **dadurch gekennzeichnet, dass** Teilmengen des nicht oberflächenbehandelten, synthetischen, amorphen, feinpartikulären Siliziumdioxids über vier Dosierstellen zudosiert werden, wobei eine dieser vier Dosierstellen der Fronteinzug, eine dieser vier Dosierstellen ein zweiter Sidefeeder und eine dieser vier Dosierstellen ein dritter Sidefeeder ist.

8. Compoundierverfahren nach einem der vorhergehenden Ansprüche, **dadurch gekennzeichnet, dass** 4 bis 18 Gew.-% des nicht oberflächenbehandelten, synthetischen, amorphen, feinpartikulären Siliziumdioxids in ein Trägerpolyamid eingearbeitet werden.

9. Compoundierverfahren nach einem der vorhergehenden Ansprüche, **dadurch gekennzeichnet, dass** Sidefeeder mit Dosierschnecken verwendet werden, welche entweder aus chromfreien Stahl bestehen oder mit einem chromfreien Schutzüberzug versehen sind.

10. Compoundierverfahren nach einem der vorhergehenden Ansprüche, **dadurch gekennzeichnet, dass** der Polyamid-Antiblock-Masterbatch als Granulat mit einem Volumen von 0.5 bis 45 mm$^3$ hergestellt wird.

11. Compoundierverfahren nach einem der vorhergehenden Ansprüche, **dadurch gekennzeichnet, dass** der Polyamid-Antiblock-Masterbatch mit maximal 15, bevorzugt maximal 10, besonders bevorzugt maximal 5, Einschlüssen pro 100 g Masterbatchgranulat hergestellt wird, wobei zur Bestimmung der Anzahl Einschlüsse pro 100 g in 100 g Masterbatchgranulat die Anzahl derjenigen Granulate ausgezählt wird die Einschlüsse aufweisen.

12. Compoundierverfahren nach einem der vorhergehenden Ansprüche, **dadurch gekennzeichnet, dass** das verwendete Trägerpolyamid ausgewählt ist aus der Gruppe, welche aus PA 6, PA 66, PA 11, PA 12, PA 1212, PA 6/12, PA 6/66, PA 6/69, PA 6I/6T und deren Mischungen besteht.

13. Compoundierverfahren nach Anspruch 12, **dadurch gekennzeichnet, dass** das verwendete Trägerpolyamid ausgewählt ist aus der Gruppe, welche aus PA 6, PA 12, PA 6/12 und PA 6I/6T und deren Mischungen besteht.

14. Verfahren zur Herstellung von Folien, **dadurch gekennzeichnet, dass** zunächst in einem Compoundierverfahren ein Polyamid-Antiblock-Masterbatch hergestellt wird, bei welchem 4 bis 23 Gew.-% eines nicht oberflächenbehandelten, synthetischen, amorphen, feinpartikulären Siliziumdioxids mit einem mittleren Teilchendurchmesser von 1 bis 8 μm in einem einzigen Extrusionsdurchgang in ein Trägerpolyamid eingearbeitet werden, wobei ein Doppelschnecken-Extruder mit einer Verfahrenslänge von mindestens 40D verwendet wird, wobei Teilmengen des nicht oberflächenbehandelten, synthetischen, amorphen, feinpartikulären Siliziumdioxids über mindestens zwei Dosierstellen in verschiedenen Zonen dieses Doppelschnecken-Extruders dem Trägerpolyamid zudosiert werden, wobei eine dieser mindestens zwei Dosierstellen ein erster Sidefeeder ist, und wobei das Compoundierverfahren bei Extruderdrehzahlen von 200 bis 1200 U/min durchgeführt wird, und dass anschliessend 1 bis 10 Gew.-% des Masterbatches dem Granulat zugegeben werden, aus dem die Folie bzw. einzelne Schichten der Folie hergestellt werden.

**Claims**

1. A compounding method for producing a polyamide anti-block masterbatch, in which 4 to 23 wt.-% of a non-surface-treated, synthetic, amorphous, finely-particulate silicon dioxide having a mean particle diameter of 1 to 8 μm is incorporated in a single extrusion pass into a carrier polyamide, **characterized in that** a double screw extruder having a processing length of at least 40D is used, partial quantities of the non-surface-treated, synthetic, amorphous, finely particulate silicon dioxide are metered via at least two metering points in various zones of this double screw extruder into the carrier polyamide, wherein one of these at least two metering points is a first side feeder, and the compounding method is carried out at extruder speeds of 200 to 1200 RPM.

2. The compounding method according to Claim 1, **characterized in that** partial quantities of the non-surface-treated, synthetic, amorphous, finely-particulate silicon dioxide are metered in via two metering points, wherein one of these two metering points is the front intake or a second side feeder.

3. The compounding method according to Claim 2, **characterized in that** partial quantities of the non-surface-treated, synthetic, amorphous, finely-particulate silicon dioxide are metered in via two metering points, wherein one of these two metering points is the front feed.

4. The compounding method according to Claim 2, **characterized in that** partial quantities of the non-surface-treated, synthetic, amorphous, finely-particulate silicon dioxide are metered in via two metering points, wherein one of these two metering points is a second side feeder.

5. The compounding method according to Claim 1, **characterized in that** partial quantities of the non-surface-treated, synthetic, amorphous, finely-particulate silicon dioxide are metered in via three metering points, wherein one of these three metering points is the front feed and one of these three metering points is a second side feeder.

6. The compounding method according to Claim 1, **characterized in that** partial quantities of the non-surface-treated, synthetic, amorphous, finely-particulate silicon dioxide are metered in via three metering points, wherein one of these three metering points is a second side feeder and one of these three metering points is a third side feeder.

7. The compounding method according to Claim 1, **characterized in that** partial quantities of the non-surface-treated, synthetic, amorphous, finely-particulate silicon dioxide are metered in via four metering points, wherein one of these four metering points is the front feed, one of these four metering points is a second side feeder, and one of these four metering points is a third side feeder.

8. The compounding method according to any one of the preceding claims, **characterized in that** 4 to 18 wt.-% of the non-surface-treated, synthetic, amorphous, finely-particulate silicon dioxide is incorporated into a carrier polyamide.

9. The compounding method according to any one of the preceding claims, **characterized in that** side feeders having metering screws are used, which consist either of chromium-free steel or are provided with a chromium-free protective coating.

10. The compounding method according to any one of the preceding claims, **characterized in that** the polyamide anti-block masterbatch is produced as a granulate having a volume of 0.5 to 45 mm$^3$.

11. The compounding method according to any one of the preceding claims, **characterized in that** the polyamide anti-block masterbatch is produced having at most 15, preferably at most 10, particularly preferably at most 5 inclusions per 100 g of masterbatch granulate, wherein, in 100 g of masterbatch granulate, the number of those granules which have inclusions is counted to determine the number of inclusions per 100 g.

12. The compounding method according to any one of the preceding claims, **characterized in that** the carrier polyamide used is selected from the group which consists of PA 6, PA 66, PA 11, PA 12, PA 1212, PA 6/12, PA 6/66, PA 6/69, PA 6I/6T, and the mixtures thereof.

13. The compounding method according to Claim 12, **characterized in that** the carrier polyamide used is selected from the group which consists of PA 6, PA 12, PA 6/12, and PA 6I/6T, and the mixtures thereof.

14. A method for producing films, **characterized in that** firstly a polyamide anti-block masterbatch is produced in a compounding method, in which 4 to 23 wt.-% of a non-surface-treated, synthetic, amorphous, finely-particulate silicon dioxide having a mean particle diameter of 1 to 8 $\mu$m is incorporated in a single extrusion pass into a carrier polyamide, wherein a double screw extruder having a processing length of at least 40D is used, wherein partial quantities of the non-surface-treated, synthetic, amorphous, finely-particulate silicon dioxide are fed via at least two metering points in various zones of this double screw extruder into the carrier polyamide, wherein one of these at least two metering points is a first side feeder, and wherein the compounding method is carried out at extruder speeds of 200 to 1200 RPM, and subsequently 1 to 10 wt.-% of the masterbatch is added to the granulate, from which the film or individual layers of the film is/are produced.

**Revendications**

1. Procédé de mélange pour fabriquer un mélange maître anti-bloc de polyamide, dans lequel on incorpore dans un polyamide support et en une seule passe d'extrusion de 4 à 23 % en poids d'un dioxyde de silicium non traité en surface, synthétique, amorphe et à fines particules avec un diamètre moyen de particules compris entre 1 et 8 $\mu$m, **caractérisé en ce qu'**on utilise une extrudeuse à deux vis avec une longueur de procédé d'au moins 40D, **en ce que** des quantités partielles du dioxyde de silicium non traité en surface, synthétique, amorphe et à fines particules sont ajoutées au polyamide support dans différentes zones de cette extrudeuse à deux vis par le biais d'au moins deux points de dosage, un de ces au moins deux points de dosage étant un premier dispositif d'alimentation latéral *(sidefeeder),* et **en ce que** le procédé de mélange est réalisé à une vitesse de rotation de l'extrudeuse de 200 à 1200 trs/min.

2. Procédé de mélange selon la revendication 1, **caractérisé en ce que** des quantités partielles du dioxyde de silicium non traité en surface, synthétique, amorphe et à fines particules sont introduites par le biais de deux points de dosage, un de ces deux points de dosage étant le dispositif d'alimentation frontal ou un deuxième dispositif d'alimentation latéral.

3. Procédé de mélange selon la revendication 2, **caractérisé en ce que** des quantités partielles du dioxyde de silicium non traité en surface, synthétique, amorphe et à fines particules sont introduites par le biais de deux points de dosage, un de ces deux points de dosage étant le dispositif d'alimentation frontal.

4. Procédé de mélange selon la revendication 2, **caractérisé en ce que** des quantités partielles du dioxyde de silicium non traité en surface, synthétique, amorphe et à fines particules sont introduites par le biais de deux points de dosage, un de ces deux points de dosage étant un deuxième dispositif d'alimentation latéral.

5. Procédé de mélange selon la revendication 1, **caractérisé en ce que** des quantités partielles du dioxyde de silicium non traité en surface, synthétique, amorphe et à fines particules sont introduites par le biais de trois points de dosage, un de ces trois points de dosage étant le dispositif d'alimentation frontal et un de ces trois points de dosage étant un deuxième dispositif d'alimentation latéral.

6. Procédé de mélange selon la revendication 1, **caractérisé en ce que** des quantités partielles du dioxyde de silicium non traité en surface, synthétique, amorphe et à fines particules sont introduites par le biais de trois points de dosage, un de ces trois points de dosage étant un deuxième dispositif d'alimentation latéral et un de ces trois points de dosage étant un troisième dispositif d'alimentation latéral.

7. Procédé de mélange selon la revendication 1, **caractérisé en ce que** des quantités partielles du dioxyde de silicium non traité en surface, synthétique, amorphe et à fines particules sont introduites par le biais de quatre points de dosage, un de ces quatre points de dosage étant le dispositif d'alimentation frontal, un de ces quatre points de dosage étant un deuxième dispositif d'alimentation latéral et un de ces quatre points de dosage étant un troisième dispositif d'alimentation latéral.

8. Procédé de mélange selon l'une des revendications précédentes, **caractérisé en ce qu'**on incorpore dans un polyamide support de 4 à 18 % en poids du dioxyde de silicium non traité en surface, synthétique, amorphe et à fines particules.

9. Procédé de mélange selon l'une des revendications précédentes, **caractérisé en ce qu'**on utilise des dispositifs d'alimentation latéraux avec des vis de dosage, lesquelles sont constituées d'acier sans chrome ou sont pourvues d'un revêtement protecteur sans chrome.

10. Procédé de mélange selon l'une des revendications précédentes, **caractérisé en ce que** le mélange maître anti-bloc de polyamide est fabriqué en tant que granulat avec un volume compris entre 0,5 et 45 mm$^3$.

11. Procédé de mélange selon l'une des revendications précédentes, **caractérisé en ce que** le mélange maître anti-bloc de polyamide est fabriqué avec au maximum 15, de préférence au maximum 10, de façon particulièrement préférée au maximum 5 inclusions pour 100 g de granulat de mélange maître, dans lequel pour déterminer le nombre d'inclusions pour 100 g, on compte dans 100 g de granulat de mélange maître le nombre de granulats qui présentent des inclusions.

**12.** Procédé de mélange selon l'une des revendications précédentes, **caractérisé en ce que** le polyamide support utilisé est choisi à partir du groupe composé de PA 6, PA 66, PA 11, PA 12, PA 1212, PA 6/12, PA 6/66, PA 6/69, PA 6I/6T et les mélanges de ces derniers.

**13.** Procédé de mélange selon la revendication 12, **caractérisé en ce que** le polyamide support utilisé est choisi à partir du groupe composé de PA 6, PA 12, PA 6/12 et PA 6I/6T et les mélanges de ces derniers.

**14.** Procédé pour fabriquer des feuilles, **caractérisé en ce qu'**on fabrique d'abord, dans un procédé de mélange, un mélange maître anti-bloc de polyamide au cours duquel on incorpore dans un polyamide support et en une seule passe d'extrusion de 4 à 23 % en poids d'un dioxyde de silicium non traité en surface, synthétique, amorphe et à fines particules avec un diamètre moyen de particules compris entre 1 et 8 $\mu$m, une extrudeuse à deux vis avec une longueur de procédé d'au moins 40D étant pour cela utilisée, dans lequel des quantités partielles du dioxyde de silicium non traité en surface, synthétique, amorphe et à fines particules sont ajoutées au polyamide support dans différentes zones de cette extrudeuse à deux vis par le biais d'au moins deux points de dosage, un de ces au moins deux points de dosage étant un premier dispositif d'alimentation latéral, et dans lequel le procédé de mélange est effectué à une vitesse de rotation de l'extrudeuse de 200 à 1200 trs/min, et **en ce que** l'on ajoute ensuite de 1 à 10 % en poids du mélange maître au granulat, à partir duquel on fabrique la feuille ou des différentes couches de la feuille.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5109049 A